(19) **Europäisches Patentamt**
**European Patent Office**
**Office européen des brevets**

(11) **EP 4 494 921 A1**

(12) **EUROPÄISCHE PATENTANMELDUNG**

(43) Veröffentlichungstag:
**22.01.2025 Patentblatt 2025/04**

(21) Anmeldenummer: **24187524.4**

(22) Anmeldetag: **09.07.2024**

(51) Internationale Patentklassifikation (IPC):
**B60L 53/302** (2019.01)   **B60L 53/30** (2019.01)

(52) Gemeinsame Patentklassifikation (CPC):
**B60L 53/302; B60L 53/305;** B60L 53/31;
B60L 2250/16

(84) Benannte Vertragsstaaten:
**AL AT BE BG CH CY CZ DE DK EE ES FI FR GB
GR HR HU IE IS IT LI LT LU LV MC ME MK MT NL
NO PL PT RO RS SE SI SK SM TR**
Benannte Erstreckungsstaaten:
**BA**
Benannte Validierungsstaaten:
**GE KH MA MD TN**

(30) Priorität: **13.07.2023 DE 102023118661**

(71) Anmelder: **ads-tec Energy GmbH**
**72622 Nürtingen (DE)**

(72) Erfinder:
• **BAREIß, Simon**
**73635 Rudersberg (DE)**
• **RAMIN, Jörg**
**73230 Kirchheim (DE)**

(74) Vertreter: **Kordel, Mattias et al**
**Gleiss Große Schrell und Partner mbB**
**Patentanwälte Rechtsanwälte**
**Leitzstrasse 45**
**70469 Stuttgart (DE)**

(54) **VERFAHREN ZUM BETREIBEN EINER ANZEIGEVORRICHTUNG EINER LADESTATION, STEUERVORRICHTUNG ZUR DURCHFÜHRUNG EINES SOLCHEN VERFAHRENS UND LADESTATION MIT DER ANZEIGEVORRICHTUNG UND EINER SOLCHEN STEUERVORRICHTUNG**

(57)     Die Erfindung betrifft ein Verfahren zum Betreiben einer Anzeigevorrichtung (3) einer Ladestation (1), wobei
- basierend auf einer der Anzeigevorrichtung (3) zugeordneten Anzeigevorrichtungs-Temperatur ($t_{AV}$) und einem der Ladestation (1) zugeordneten Ladestations-Temperatur-Zustand ($Z_{LS}$) ein Betriebszustand ($Z_{AV}$) der Anzeigevorrichtung (3) festgelegt wird, wobei
- die Anzeigevorrichtung (3) in den Betriebszustand ($Z_{AV}$) versetzt wird.

Fig. 1

EP 4 494 921 A1

**Beschreibung**

Die Erfindung betrifft ein Verfahren zum Betreiben einer Anzeigevorrichtung einer Ladestation, eine Steuervorrichtung zur Durchführung eines solchen Verfahrens und eine Ladestation mit der Anzeigevorrichtung und einer solchen Steuervorrichtung.

Ladestationen, insbesondere Schnellladestationen für Kraftfahrzeuge, welche einen elektrischen Antrieb aufweisen, gewinnen zunehmend an Bedeutung. Weiterhin ist bekannt, dass solche Ladestationen Anzeigevorrichtungen aufweisen, die eingerichtet sind, um Informationen, typischerweise Werbeeinblendungen, anzuzeigen. Insbesondere sollten solche Anzeigevorrichtung nur bei vorbestimmten Temperaturen betrieben werden, da ansonsten Bildschirme, typischerweise Flüssigkristalle der Bildschirmtechnik, dauerhaft geschädigt werden. Darüber hinaus erzeugen die Anzeigevorrichtungen Abwärme, die zumindest zeitweise zusätzlich abgeführt werden muss und sich daher negativ auf eine Leistungsbereitstellung und/oder gegebenenfalls eine Speicherkapazität, beispielsweise einer Batterie, der Ladestation auswirkt.

Der Erfindung liegt daher die Aufgabe zugrunde, ein Verfahren zum Betreiben einer Anzeigevorrichtung einer Ladestation, eine Steuervorrichtung zur Durchführung eines solchen Verfahrens und eine Ladestation mit der Anzeigevorrichtung und einer solchen Steuervorrichtung zu schaffen, wobei die genannten Nachteile zumindest teilweise behoben, vorzugsweise vermieden sind.

Die Aufgabe wird gelöst, indem die vorliegende technische Lehre bereitgestellt wird, insbesondere die Lehre der unabhängigen Ansprüche sowie der in den abhängigen Ansprüchen und der Beschreibung offenbarten Ausführungsformen.

Die Aufgabe wird insbesondere gelöst, indem ein Verfahren zum Betreiben einer Anzeigevorrichtung einer Ladestation geschaffen wird. Dabei wird basierend auf einer der Anzeigevorrichtung zugeordneten Anzeigevorrichtungs-Temperatur und einem der Ladestation zugeordneten Ladestations-Temperatur-Zustand ein Betriebszustand der Anzeigevorrichtung festgelegt. Anschließend wird die Anzeigevorrichtung in den Betriebszustand versetzt. Vorteilhafterweise ist es damit möglich, die Anzeigevorrichtung basierend auf Parametern der Ladestation - nämlich der Anzeigevorrichtungs-Temperatur und dem Ladestations-Temperatur-Zustand - in einem passenden Betriebszustand zu betreiben und so insbesondere eine Abwärme der Anzeigevorrichtung zu reduzieren.

In einer Ausgestaltung wird die Anzeigevorrichtungs-Temperatur mittels eines Anzeigevorrichtungs-Temperatursensors bestimmt.

In einer Ausgestaltung wird mittels des Anzeigevorrichtungs-Temperatursensors eine einem räumlichen Bereich der Anzeigevorrichtung zugeordnete Anzeigevorrichtungs-Bereichs-Temperatur ermittelt, wobei die Anzeigevorrichtungs-Temperatur der Anzeigevorrichtungs-Bereichs-Temperatur entspricht.

Weiterhin wird vorzugsweise der Ladestations-Temperatur-Zustand von einem Steuergerät der Ladestation bestimmt und/oder vorgegeben.

Gemäß einer Weiterbildung der Erfindung ist vorgesehen, dass der Betriebszustand ausgewählt wird aus einer Gruppe, bestehend aus: einem ersten Betriebszustand, in dem eine Hintergrundbeleuchtung der Anzeigevorrichtung ausgeschaltet ist, einem zweiten Betriebszustand, in dem die Hintergrundbeleuchtung der Anzeigevorrichtung angeschaltet ist, und einem dritten Betriebszustand, in dem die Anzeigevorrichtung - vollständig - ausgeschaltet ist. Vorteilhafterweise ist es mittels Ausschaltens der Hintergrundbeleuchtung und/oder Ausschaltens der Anzeigevorrichtung möglich, eine Abwärme der Anzeigevorrichtung zu verringern und somit die Leistungsbereitstellung der Ladestation aufrecht zu erhalten, vorzugsweise zu verbessern. Weiterhin ist es mittels Ausschaltens der Anzeigevorrichtung vorteilhafterweise möglich, die Anzeigevorrichtung vor einer dauerhaften Beschädigung bei zu niedrigen und/oder zu hohen Anzeigevorrichtungs-Temperaturen zu schützen.

Insbesondere ist die Anzeigevorrichtung in dem ersten Betriebszustand und in dem zweiten Betriebszustand eingeschaltet.

Gemäß einer Weiterbildung der Erfindung ist vorgesehen, dass als der Ladestations-Temperatur-Zustand ein Lastzustand einer Klimatisierungsvorrichtung der Ladestation verwendet wird. Unter einem Lastzustand der Klimatisierungsvorrichtung wird im Kontext der vorliegenden technischen Lehre insbesondere ein thermischer Lastzustand der Klimatisierungsvorrichtung verstanden.

Der Lastzustand ist in einer Ausgestaltung ausgewählt aus einer Gruppe, bestehend aus einem Normalzustand und einem Überlastzustand. Damit ist es vorteilhafterweise möglich, basierend auf dem Betriebszustand - insbesondere mittels Ausschaltens der Hintergrundbeleuchtung und/oder Ausschaltens der Anzeigevorrichtung - die Abwärme der Anzeigevorrichtung zu verringern und somit die Klimatisierungsvorrichtung der Ladestation zu entlasten. Dies wirkt sich zugleich positiv auf die Leistungsbereitschaft der Ladestation aus.

In einer Ausführungsform ist vorgesehen, dass der Lastzustand ermittelt wird, indem mindestens eine Lastgröße der Klimatisierungsvorrichtung mit einem vorbestimmten Lastgrößen-Zielwert verglichen wird, der der mindestens einen Lastgröße zugeordnet ist.

In einer Ausführungsform ist vorgesehen, dass die mindestens eine Lastgröße ausgewählt ist aus einer Kondensatortemperatur der Klimatisierungsvorrichtung, einem Kondensatordruck der Klimatisierungsvorrichtung, und einer Kombination der genannten Lastgrößen. Vorteilhaft sind die hier genannten Lastgrößen in besonderer Weise geeignet, um den Lastzustand der Klimatisierungsvorrichtung zu ermitteln, insbesondere da in diese Lastgrößen bereits alle relevanten Umstände und auch Umgebungsbedingungen - gerade auch mit Blick auf eine Rückkühlung der Klimatisierungsvorrichtung - intrinsisch eingehen. Die genannten Lastgrößen berücksichtigen somit in einfacher Weise insbesondere sowohl die thermische Belastung der Klimatisierungsvorrichtung als auch eine momentane Rückkühlleistung, beispielsweise aufgrund einer vorliegenden Temperaturdifferenz zur Umgebung.

Unter einer Kondensatortemperatur wird dabei im Kontext der vorliegenden technischen Lehre insbesondere eine Temperatur verstanden, die charakteristisch ist für eine Kondensationstemperatur und/oder einen Kondensationsdruck des Kältemittels im Kondensator der insbesondere als Kompressionskältemaschine ausgebildeten oder eine Kompressionskältemaschine aufweisenden Klimatisierungsvorrichtung. Diese weist einen geschlossenen Kältemittelkreislauf auf, der - in der angegebenen Reihenfolge in Strömungsrichtung des Kältemittels - folgende Kältekomponenten aufweist: einen Kältemittelverdichter, den Kondensator, eine Drosselvorrichtung oder ein Entspannungsventil, und einen Verdampfer. Insbesondere ist die Klimatisierungsvorrichtung eingerichtet zur Durchführung eines thermodynamischen Kreisprozesses.

In einer Ausgestaltung kann die Kondensatortemperatur unmittelbar die Kondensationstemperatur des Kältemittels in dem Kondensator sein. In einer anderen Ausgestaltung kann als die Kondensatortemperatur beispielsweise eine Temperatur eines warmen Zweigs eines thermisch mit dem Kondensator zur Rückkühlung wirkverbundenen Rückkühl-Kreislaufs, beispielsweise eines Rückkühl-Kühlmittelkreislaufs, insbesondere eines Rückkühl-Kühlwasserkreislaufs, erfasst werden. In wieder einer anderen Ausgestaltung kann die Kondensatortemperatur stromaufwärts oder stromabwärts des Kondensators im Kältemittelkreislauf der Klimatisierungsvorrichtung erfasst werden.

Unter einem Kondensatordruck wird im Kontext der vorliegenden technischen Lehre insbesondere ein Druck verstanden, der charakteristisch ist für den Kondensationsdruck und/oder die Kondensationstemperatur des Kältemittels im Kondensator der Klimatisierungsvorrichtung. In einer Ausgestaltung kann der Kondensatordruck unmittelbar der Kondensationsdruck des Kältemittels in dem Kondensator sein. In einer anderen Ausgestaltung kann der Kondensatordruck stromaufwärts oder stromabwärts des Kondensators im Kältemittelkreislauf der Klimatisierungsvorrichtung erfasst werden.

In einer Ausführungsform ist vorgesehen, dass ein Abregelungsfaktor durch einen Abregelungsregler bestimmt wird, in den ein momentaner Wert der mindestens einen Lastgröße als Ist-Wert und der der mindestens einen Lastgröße zugeordnete vorbestimmte Lastgrößen-Zielwert als Soll-Wert eingehen, wobei der Abregelungsfaktor in Abhängigkeit einer Regelabweichung des Ist-Werts von dem Soll-Wert ermittelt, insbesondere berechnet wird. Vorteilhaft kann so der Abregelungsfaktor in einfacher, schneller, wenig rechenintensiver und zugleich präziser Weise bestimmt werden. Der Abregelungsfaktor ist insbesondere ein Maß für die thermische Last der Klimatisierungsvorrichtung. Bevorzugt wird eine Ladeleistung der Ladestation in Abhängigkeit von dem Abregelungsfaktor begrenzt.

In einer Ausführungsform gehen in den Abregelungsregler als Ist-Wert ein Ist-Kondensatordruck, insbesondere Ist-Kondensationsdruck, der Klimatisierungsvorrichtung und als Soll-Wert ein Soll-Kondensatordruck, insbesondere Soll-Kondensationsdruck, für die Klimatisierungsvorrichtung ein.

In einer Ausgestaltung wird als der Abregelungsregler zur Bestimmung des Abregelungsfaktors ein Proportional-Integral-Regler (PI-Regler) verwendet.

Es ist möglich, dass Regelparameter des Abregelungsreglers durch einen Betreiber der Ladestation parametrierbar sind. Insbesondere ist es möglich, dass mindestens ein Regelparameter, ausgewählt aus einer Regelverstärkung und einer Nachstellzeit, durch den Betreiber eingestellt werden kann. Insbesondere können in einer Ausgestaltung sowohl die Regelverstärkung als auch die Nachstellzeit durch den Betreiber eingestellt werden.

Der Kondensatordruck, insbesondere der Kondensationsdruck, kann beispielsweise bei Verwendung von R513a als Kältemittel einen zulässigen Wertebereich von 1 bar bis 30 bar haben. In einer Ausführungsform beträgt der Soll-Kondensatordruck, insbesondere der Soll-Kondensationsdruck, von 18 bar bis 25 bar. Für andere Kältemittel können andere Werte gelten beziehungsweise gewählt werden.

In einer Ausführungsform ist vorgesehen, dass in einem Überlast-Prüfschritt geprüft wird, ob ein Überlastzustand der Klimatisierungsvorrichtung vorliegt. Insbesondere wird in dem Überlast-Prüfschritt festgestellt, dass der Überlastzustand vorliegt, wenn der Lastzustand - insbesondere repräsentiert durch den Abregelungsfaktor und/oder die mindestens eine Lastgröße - einen vorbestimmten ersten Lastzustands-Schwellenwert überschreitet, und zusätzlich mindestens ein weiterer, insbesondere zwei weitere Wärmeparameter der Ladestation, einen zugeordneten ersten Wärmeparameter-Schwellenwert überschreitet. In dem Überlast-Prüfschritt wird festgestellt, dass kein Überlastzustand vorliegt, wenn der Lastzustand - insbesondere der Abregelungsfaktor und/oder die mindestens eine Lastgröße als die für den Lastzustand charakteristischen oder den Lastzustand repräsentierenden Parameter - einen vorbestimmten zweiten Lastzustands-Schwellenwert unterschreitet, und zusätzlich der mindestens eine weitere Wärmeparameter, insbesondere die beiden weiteren Wärmeparameter, einen zugeordneten zweiten Wärmeparameter-Schwellenwert unterschreitet.

Insbesondere liegt der Normalzustand vor, wenn der Überlastzustand nicht vorliegt.

In einer Ausgestaltung ist der vorbestimmte erste Lastzustands-Schwellenwert größer als der vorbestimmte zweite Lastzustands-Schwellenwert. Alternativ oder zusätzlich sind die ersten Wärmeparameter-Schwellenwerte jeweils größer als die zugeordneten zweiten Wärmeparameter-Schwellenwerte. Vorteilhaft ergibt sich auf diese Weise eine Hysterese in der Bestimmung des Überlastzustands.

Insbesondere ist der vorbestimmte zweite Lastzustands-Schwellenwert in einer Ausgestaltung gleich dem vorbestimmten ersten Lastzustands-Schwellenwert abzüglich eines Lastzustands-Hysteresewerts. Alternativ oder zusätzlich sind die ersten Wärmeparameter-Schwellenwerte jeweils gleich den zugeordneten zweiten Wärmeparameter-Schwellenwerten abzüglich jeweils zugeordneter Wärmeparameter-Hysteresewerte.

In einer anderen Ausgestaltung ist der vorbestimmte erste Lastzustands-Schwellenwert gleich dem vorbestimmten zweiten Lastzustands-Schwellenwert. Alternativ oder zusätzlich sind die einander zugeordneten ersten und zweiten Wärmeparameter-Schwellenwerte jeweils gleich.

In einer Ausführungsform ist vorgesehen, dass der mindestens eine weitere Wärmeparameter ausgewählt ist aus einer Gruppe, bestehend aus: einer Batterie-Temperatur der Batterie der Ladestation, einer Kühlmittel-Temperatur eines Kühlmittels eines Kühlmittel-Kreislaufs, und einer Kombination der genannten Wärmeparameter. Diese Wärmeparameter sind jeweils charakteristisch für eine in der Ladestation insgesamt anfallende thermische Last und damit zugleich relevant für die Beurteilung eines Vorliegens des Überlastzustands.

Das Kühlmittel ist insbesondere ein in einem zur Kühlung der Ladestation vorgesehenen Kühlmittel-Kreislauf zirkulierendes Kühlmittel, insbesondere Kühlwasser, optional in Kombination mit einem Frostschutzmittel, insbesondere Glykol. Als Kühlmittel-Temperatur wird in einer Ausgestaltung eine Kühlmitteltank-Temperatur in einem Kühlmitteltank, insbesondere Wassertank, erfasst, wobei der Kühlmitteltank insbesondere als ein Vorrats- und/oder Puffergefäß für den Kühlmittel-Kreislauf dient und insbesondere in den Kühlmittel-Kreislauf eingebunden ist. Somit ist die Kühlmitteltank-Temperatur charakteristisch für eine Temperatur des Kühlmittel-Kreislaufs und damit eine in dem Kühlmittel-Kreislauf anfallende thermische Last.

In einer Ausgestaltung wird in dem Überlast-Prüfschritt festgestellt, dass der Überlastzustand vorliegt, wenn der Abregelungsfaktor den vorbestimmten ersten Lastzustands-Schwellenwert überschreitet, und zusätzlich die Batterie-Temperatur und die Kühlmittel-Temperatur ihre jeweils zugeordneten ersten Wärmeparameter-Schwellenwerte überschreiten. Alternativ oder zusätzlich wird in dem Überlast-Prüfschritt festgestellt, dass der Überlastzustand nicht vorliegt, wenn der Abregelungsfaktor den vorbestimmten ersten Lastzustands-Schwellenwert abzüglich des Lastzustands-Hysteresewerts unterschreitet, und zusätzlich die Batterie-Temperatur und die Kühlmittel-Temperatur ihre jeweils zugeordneten ersten Wärmeparameter-Schwellenwerte abzüglich des jeweiligen Wärmeparameter-Hysteresewerts unterschreiten.

Die Batterie-Temperatur kann beispielsweise einen zulässigen Wertebereich von -20 °C bis 45 °C haben. Die Kühlmittel-Temperatur, insbesondere eine Kühlmitteltank-Temperatur kann einen zulässigen Wertebereich von -20 °C bis 35 °C haben.

In einer Ausführungsform beträgt der vorbestimmte erste Lastzustands-Schwellenwert von 0,3 bis 0,6. Alternativ oder zusätzlich beträgt der vorbestimmte zweite Lastzustands-Schwellenwert von 0,1 bis 0,4. Alternativ oder zusätzlich beträgt der Lastzustands-Hysteresewert von 0,2 bis 0,6, insbesondere bis 0,3.

Alternativ oder zusätzlich beträgt der der Batterie-Temperatur zugeordnete erste Wärmeparameter-Schwellenwert von 30 °C bis 40 °C. Alternativ oder zusätzlich beträgt der der Batterie-Temperatur zugeordnete zweite Wärmeparameter-Schwellenwert von 25 °C bis 35 °C. Alternativ oder zusätzlich beträgt der der Batterie-Temperatur zugeordnete Wärmeparameter-Hysteresewert von 5 °C bis 15 °C.

Weiter alternativ oder zusätzlich beträgt der der Kühlmittel-Temperatur, insbesondere der Kühlmitteltank-Temperatur, zugeordnete erste Wärmeparameter-Schwellenwert von 28 °C bis 35 °C. Alternativ oder zusätzlich beträgt der der Kühlmittel-Temperatur, insbesondere der Kühlmitteltank-Temperatur, zugeordnete zweite Wärmeparameter-Schwellenwert von 20 °C bis 30 °C. Alternativ oder zusätzlich beträgt der der Kühlmittel-Temperatur, insbesondere der Kühlmitteltank-Temperatur, zugeordnete Wärmeparameter-Hysteresewert von 5 °C bis 15 °C.

Gemäß einer Weiterbildung der Erfindung ist vorgesehen, dass zur Festlegung des Betriebszustandes zusätzlich ein Anzeigevorrichtungs-Betriebsmodus herangezogen wird. Vorteilhafterweise ist es damit insbesondere möglich, Präferenzen eines Betreibers der Ladestation mit Blick auf den Betrieb der der Anzeigevorrichtung bei der Festlegung des Betriebszustands zu berücksichtigen.

Gemäß einer Weiterbildung der Erfindung ist vorgesehen, dass der Anzeigevorrichtungs-Betriebsmodus ausgewählt ist aus einer Gruppe, bestehend aus einem Normalbetrieb und einem Prioritätsbetrieb. Vorzugsweise wird der Anzeigevorrichtungs-Betriebsmodus von einem Betreiber der Ladestation vorgegeben. Dabei ist es möglich, dass der Betreiber der Ladestation den Anzeigevorrichtungs-Betriebsmodus direkt an der Ladestation, per Fernwartung, per Funkübertragung, und/oder per kabelgebundener Datenübertragung einstellt und/oder ändert. Insbesondere kann der Betreiber durch Wahl des Prioritätsbetriebs den Betrieb der Anzeigevorrichtung höher priorisieren als die Entlastung der Klimatisierungsvorrichtung; umgekehrt kann der Betreiber durch Wahl des Normalbetriebs die Entlastung der Klimatisierungsvorrichtung höher priorisieren als den Betrieb der Anzeigevorrichtung. Weiterhin kann für den Anzeigevorrichtungs-Betriebsmodus ein Standardwert voreingestellt sein, den der Betreiber bei Bedarf überschreiben kann.

Gemäß einer Weiterbildung der Erfindung ist vorgesehen, dass zur Festlegung des Betriebszustandes zusätzlich eine Ladestations-Innentemperatur der Ladestation herangezogen wird. Vorteilhafterweise ist es damit möglich, die für den Betrieb der Anzeigevorrichtung relevante Temperatur in die Festlegung des Betriebszustandes einzubeziehen und auf diese Weise die Anzeigevorrichtung vor einer dauerhaften Beschädigung insbesondere bei zu niedrigen Temperaturen zu schützen. Gerade wenn nämlich die Anzeigevorrichtung mit Luft aus dem Inneren der Ladestation angeströmt wird, ist die Ladestation-Innentemperatur als für den Luftstrom charakteristische Temperatur auch die für den Betrieb der Anzeigevorrichtung relevante Temperatur.

Im Kontext der vorliegenden technischen Lehre ist die Ladestations-Innentemperatur eine Temperatur der Luft in einem Inneren der Ladestation.

In einer Ausgestaltung wird die Ladestations-Innentemperatur mittels eines Ladestations-Temperatursensors bestimmt.

In einer Ausgestaltung wird mittels des Ladestations-Temperatursensors eine einem inneren räumlichen Bereich der Ladestation, vorzugsweise einem Bereich einer Batterie der Ladestation, zugeordnete Ladestations-Bereichs-Innentemperatur ermittelt, wobei die Ladestations-Innentemperatur der Ladestations-Bereichs-Innentemperatur entspricht.

In einer alternativen Ausgestaltung wird die Ladestations-Innentemperatur mittels einer Mehrzahl an Ladestations-Temperatursensoren bestimmt.

In einer Ausgestaltung wird mittels der Mehrzahl an Ladestations-Temperatursensoren jeweils eine einem inneren räumlichen Teil-Bereich der Ladestation, insbesondere einem Bereich der Batterie der Ladestation, zugeordnete Ladestations-Bereichs-Innentemperatur ermittelt, wobei die Ladestations-Innentemperatur einem Maximum oder einem Mittelwert der Mehrzahl an Ladestations-Bereichs-Innentemperaturen entspricht. Insbesondere ist die Mehrzahl an Ladestations-Bereichs-Innentemperaturen einem gemeinsamen Zeitpunkt zugeordnet.

In einer Ausgestaltung wird die Luft in der Ladestation für die Temperierung der Anzeigevorrichtung genutzt. Daher ist es vorteilhaft, die Ladestations-Innentemperatur zu kennen und zur Festlegung des Betriebszustandes heranzuziehen.

Bei einer bestimmungsgemäßen Verwendung der Ladestation beträgt die Ladestations-Innentemperatur insbesondere jahreszeit- und wetterabhängig typischerweise von -20 °C bis 45 °C.

Gemäß einer Weiterbildung der Erfindung ist vorgesehen, dass basierend auf dem Anzeigevorrichtungs-Betriebsmodus ein Ventilator-Betriebspunkt mindestens eines der Anzeigevorrichtung zugeordneten Ventilators festgelegt wird. Weiterhin wird der Ventilator in den Ventilator-Betriebspunkt versetzt. Alternativ oder zusätzlich zur Reduzierung der Abwärme der Anzeigevorrichtung ist es mittels des Ventilators vorteilhafterweise möglich, die Anzeigevorrichtung zu kühlen und somit eine dauerhafte Schädigung der Anzeigevorrichtung zu verhindern.

Vorzugsweise wird als Ventilator-Betriebspunkt eine Drehzahl des mindestens einen der Anzeigevorrichtung zugeordneten Ventilators festgelegt.

Gemäß einer Weiterbildung der Erfindung ist vorgesehen, dass zur Bestimmung des Ventilator-Betriebspunkts zusätzlich mindestens ein Ventilator-Betriebspunktparameter herangezogen wird. Der mindestens eine Ventilator-Betriebspunktparameter ist ausgewählt aus einer Gruppe, bestehend aus einer Ladestations-Umgebungstemperatur, der Anzeigevorrichtungs-Temperatur, einer Soll-Anzeigevorrichtungs-Temperatur, einem Ventilator-Steuerungsparameter, und einer beliebigen Kombination von mindestens zwei der vorhergehenden Parameter.

In einer Ausgestaltung wird die Soll-Anzeigevorrichtungs-Temperatur in Abhängigkeit von der Ladestations-Umgebungstemperatur und/oder dem Anzeigevorrichtungs-Betriebsmodus gewählt. Insbesondere wird zur Bestimmung der Soll-Anzeigevorrichtungs-Temperatur in Abhängigkeit von der Ladestations-Umgebungstemperatur ein Normalbetriebs-Zusammenhang - insbesondere eine Normalbetriebs-Kennlinie oder Normalbetriebs-Lookup-Tabelle - und ein Prioritätsbetriebs-Zusammenhang - insbesondere eine Prioritätsbetriebs-Kennlinie oder Prioritätsbetriebs-Lookup-Tabelle - verwendet. Dabei ordnet der Prioritätsbetriebs-Zusammenhang einer ersten Ladestations-Umgebungstemperatur ein erste Soll-Anzeigevorrichtungs-Temperatur zu, und der Normalbetriebs-Zusammenhang ordnet der ersten Ladestations-Umgebungstemperatur ein zweite Soll-Anzeigevorrichtungs-Temperatur zu, wobei die erste Soll-Anzeigevorrichtungs-Temperatur höchstens so groß, insbesondere kleiner als, die zweite Soll-Anzeigevorrichtungs-Temperatur ist. Dadurch ergibt sich vorteilhaftweise im Prioritätsbetrieb im Vergleich zu dem Normalbetrieb eine stärkere Kühlung bei gleicher Ladestations-Umgebungstemperatur. Insbesondere sind eine Mehrzahl an Ladestations-Umgebungstemperaturen mit den jeweiligen zugeordneten Soll-Anzeigevorrichtungs-Temperaturen in einer Kennlinie oder Lookup-Tabelle gespeichert. Alternativ sind für den Normalbetrieb der Anzeigevorrichtung - d.h. der Anzeigevorrichtungs-Betriebsmodus entspricht dem Normalbetrieb - eine Mehrzahl an Ladestations-Umgebungstemperaturen mit den jeweiligen zugeordneten Soll-Anzeigevorrichtungs-Temperaturen in der Normalbetriebs-Kennlinie oder Normalbetriebs-Lookup-Tabelle gespeichert. Alternativ oder zusätzlich sind für den Prioritätsbetrieb der Anzeigevorrichtung - d.h. der Anzeigevorrichtungs-Betriebsmodus entspricht dem Prioritätsbetrieb - eine Mehrzahl an Ladestations-Umgebungstemperaturen mit den jeweiligen zugeordneten Soll-Anzeigevorrichtungs-Temperaturen in der Prioritätsbetriebs-Kennlinie oder Prioritätsbetriebs-Lookup-Tabelle gespeichert. Insbesondere ist die Prioritätsbetriebs-Kennlinie gegenüber der Normalbetriebs-Kennlinie in Bezug auf die Ladestations-Umgebungstemperatur in Richtung ansteigender Ladestations-Umgebungstemperaturen versetzt. Alternativ oder zusätzlich ist Prioritätsbetriebs-Kennlinie gegenüber der Normalbetriebs-Kennlinie in Bezug auf die Soll-Anzeigevorrichtungs-Temperatur in Richtung sinkender Soll-Anzeigevorrichtungs-Temperatur versetzt., d.h. abgesenkt.

In einer bevorzugten Ausgestaltung wird ein Regler, insbesondere ein PI-Regler, verwendet, um basierend auf der Anzeigevorrichtungs-Temperatur, der Soll-Anzeigevorrichtungs-Temperatur und dem Ventilator-Steuerungsparameter, sowie abhängig von insbesondere parametrierbaren Reglerparametern wie beispielsweise einer Regelverstärkung und einer Nachstellzeit, den Ventilator-Betriebspunkts zu bestimmen. Dabei wird die Soll-Anzeigevorrichtungs-Temperatur in Abhängigkeit von dem Anzeigevorrichtungs-Betriebsmodus und der Ladestations-Umgebungstemperatur gewählt, insbesondere wahlweise mittels des Prioritätsbetriebs-Zusammenhangs oder des Normalbetriebs-Zusammenhangs.

Insbesondere wird als die Soll-Anzeigevorrichtungs-Temperatur eine Temperatur von 30 °C bis 65 °C gewählt.

Gemäß einer Weiterbildung der Erfindung ist vorgesehen, dass mittels einer Mehrzahl an Anzeigevorrichtungs-Temperatursensoren jeweils eine - insbesondere einem gemeinsamen Zeitpunkt zugeordneten - Anzeigevorrichtungs-Bereichs-Temperatur ermittelt wird, wobei die Anzeigevorrichtungs-Temperatur anhand der Mehrzahl an Anzeigevorrichtungs-Bereichs-Temperaturen bestimmt wird. Vorteilhafterweise ist damit eine genaue und zuverlässige Bestimmung der Anzeigevorrichtungs-Temperatur möglich.

In einer Ausgestaltung wird die Anzeigevorrichtungs-Temperatur mittels einer Mehrzahl an Anzeigevorrichtungs-Temperatursensoren bestimmt.

In einer Ausgestaltung wird mittels der Mehrzahl an Anzeigevorrichtungs-Temperatursensoren jeweils eine einem räumlichen Bereich der Anzeigevorrichtung zugeordnete Anzeigevorrichtungs-Bereichs-Temperatur ermittelt, wobei die Anzeigevorrichtungs-Temperatur einem Maximum oder einem Mittelwert der Mehrzahl an Anzeigevorrichtungs-Bereichs-Temperaturen entspricht.

Gemäß einer Weiterbildung der Erfindung ist vorgesehen, dass der erste Betriebszustand festgelegt wird, wenn sich der Ladestations-Temperatur-Zustand in dem Überlastzustand befindet, sich der Anzeigevorrichtungs-Betriebsmodus in dem Prioritätsbetrieb befindet und die Anzeigevorrichtungs-Temperatur größer ist als eine Maximal-Anzeigevorrichtungs-Temperatur. Alternativ oder zusätzlich wird der erste Betriebszustand festgelegt, wenn sich der Ladestations-Temperatur-Zustand in dem Überlastzustand und der Anzeigevorrichtungs-Betriebsmodus in dem Normalbetrieb befindet, insbesondere unabhängig von der Anzeigevorrichtungs-Temperatur. Alternativ oder zusätzlich wird der zweite Betriebszustand festgelegt, wenn sich der Ladestations-Temperatur-Zustand in dem Normalzustand befindet und die Ladestations-Innentemperatur mindestens einer Mindest-Anzeigevorrichtungs-Umgebungstemperatur entspricht. Alternativ oder zusätzlich wird der dritte Betriebszustand festgelegt, wenn sich der Ladestations-Temperatur-Zustand in dem Normalzustand befindet und die Ladestations-Innentemperatur höchstens einer Minimal-Anzeigevorrichtungs-Umgebungstemperatur entspricht.

Vorzugsweise beträgt die Maximal-Anzeigevorrichtungs-Temperatur von 40 °C bis 70 °C. Alternativ oder zusätzlich beträgt die Mindest-Anzeigevorrichtungs-Umgebungstemperatur von 5 °C bis 15 °C. Alternativ oder zusätzlich beträgt die Minimal-Anzeigevorrichtungs-Umgebungstemperatur von -5 °C bis 5 °C.

In einer Ausgestaltung ist die Mindest-Anzeigevorrichtungs-Umgebungstemperatur gleich der Minimal-Anzeigevorrichtungs-Umgebungstemperatur.

In einer alternativen Ausgestaltung ist die Mindest-Anzeigevorrichtungs-Umgebungstemperatur größer als die Minimal-Anzeigevorrichtungs-Umgebungstemperatur. Vorteilhafterweise wird damit eine Hysterese zwischen einem Ausschalten der Anzeigevorrichtung und einem erneuten Anschalten der Anzeigevorrichtung ausgebildet, sodass geringe Fluktuationen der Ladestations-Innentemperatur keinen Einfluss auf den Betriebszustand der Anzeigevorrichtung haben.

In einer Ausgestaltung wird mindestens eine Temperatur, ausgewählt aus einer Gruppe, bestehend aus der Maximal-Anzeigevorrichtungs-Temperatur, der Mindest-Anzeigevorrichtungs-Umgebungstemperatur, der Minimal-Anzeigevorrichtungs-Umgebungstemperatur, und einer Kombination von mindestens zwei der vorhergehenden Temperaturen, von dem Betreiber der Ladestation vorgegeben. Dabei ist es möglich, dass der Betreiber der Ladestation die mindestens eine Temperatur, ausgewählt aus der vorstehenden Gruppe, direkt an der Ladestation, per Fernwartung, per Funkübertragung, und/oder per kabelgebundener Datenübertragung einstellt und/oder ändert. Weiterhin kann für die mindestens eine Temperatur, ausgewählt aus der vorstehenden Gruppe, ein Standardwert voreingestellt sein, den der Betreiber bei Bedarf überschreiben kann.

Gemäß einer Weiterbildung der Erfindung ist vorgesehen, dass der Betriebszustand der Anzeigevorrichtung wiederholt festgelegt wird.

Vorzugsweise wird der Betriebszustand der Anzeigevorrichtung mit einem vorbestimmten zeitlichen Abstand oder mit einer Frequenz von 1 Hz bis 10 Hz, besonders bevorzugt 5 Hz, festgelegt. Die Anzeigevorrichtung wird bei jeder Festlegung des Betriebszustands in den zuletzt festgelegten Betriebszustand versetzt, was einschließt, dass sie in ihrem bisherigen Betriebszustand verbleibt, wenn dieser sich nicht von dem zuletzt festgelegten Betriebszustand unterscheidet.

Die Aufgabe wird auch gelöst, indem eine Steuervorrichtung geschaffen wird, die zur Durchführung eines erfindungsgemäßen Verfahrens oder eines Verfahrens nach einer oder mehreren der zuvor beschriebenen Ausgestaltungen eingerichtet ist. In Zusammenhang mit der Steuervorrichtung ergeben sich insbesondere die Vorteile, die bereits in Zusammenhang mit dem Verfahren erläutert wurden.

Vorzugsweise ist zwischen der Anzeigevorrichtung, der Ladestation und der Steuervorrichtung eine Kommunikationsverbindung ausgebildet, wobei die Steuervorrichtung steuerungswirkverbindbar, besonders bevorzugt steuerungswirkverbunden, mit der Ladestation und der Anzeigevorrichtung ist, um ein erfindungsgemäßes Verfahren oder ein Verfahren nach einer oder mehreren der zuvor beschriebenen Ausgestaltungen durchzuführen.

Die Aufgabe wird auch gelöst, indem eine Ladestation mit einer eine Hintergrundbeleuchtung aufweisenden Anzeigevorrichtung und einer erfindungsgemäßen Steuervorrichtung oder einer Steuervorrichtung nach einer der zuvor beschriebenen Ausgestaltungen geschaffen wird. In Zusammenhang mit der Ladestation ergeben sich insbesondere die Vorteile die bereits in Zusammenhang mit dem Verfahren und der Steuervorrichtung erläutert wurden.

Als Ladestation wird in der Elektrotechnik jedwede, insbesondere stationäre oder mobile, Vorrichtung oder elektrische Anlage bezeichnet, welche dazu dient, mobilen akkubetriebenen Geräten, Maschinen oder Kraftfahrzeugen durch einfaches Einstellen oder Einstecken Energie zuzuführen, ohne den Energiespeicher - etwa die Traktionsbatterie eines Elektroautos - zwangsläufig entnehmen zu müssen. Ladestationen für Elektroautos werden mitunter auch als "Stromtankstellen" bezeichnet und können mehrere Ladepunkte umfassen. Bekannt sind hier insbesondere Gleichstrom-Schnellladesysteme (high performance charging systems oder high power charging systems, HPC-Systeme) wie das in Europa verbreitete, sogenannte kombinierte Ladesystem (combined charging system, CCS). Beim gattungsmäßigen Gleichstromladen wird Gleichstrom aus der Ladestation direkt in die Batterie des Fahrzeugs eingespeist und hierzu durch einen leistungsstarken Gleichrichter, bevorzugt der Ladestation, vom Stromnetz oder durch große Pufferakkumulatoren an z.B. Solartankstellen bereitgestellt. Im Fahrzeug befindet sich ein Batteriemanagementsystem, das mit der Ladestation direkt oder indirekt kommuniziert, um die Stromstärke und -spannung anzupassen oder bei Erreichung einer vorbestimmten Kapazitätsgrenze den Vorgang zu beenden. Eine Leistungselektronik befindet sich hierbei üblicherweise in der Ladestation. Da die Gleichstromanschlüsse der Ladestation direkt - ohne Umweg über einen AC/DC-Wandler des Fahrzeugs - mit entsprechenden Anschlüssen der Traktionsbatterie verbunden werden, lassen sich verlustarm hohe Ladeströme übertragen, was kurze Ladezeiten ermöglicht.

In einer Ausführungsform ist die Ladestation als eine Ladesäule ausgebildet. Insbesondere weist die Ladestation mindestens einen Ladepunkt, insbesondere genau einen Ladepunkt oder genau zwei Ladepunkte, auf. Insbesondere weist ein Ladepunkt ein Ladekabel, einen Ladestecker, eine Ladestecker-Haltevorrichtung und einen eichrechtskonformen Stromzähler auf.

Insbesondere ist die Ladestation als Schnellladestation ausgebildet. In einer Ausführungsform ist die Ladestation als batteriegestützte Ladestation, insbesondere als batteriegestützte Schnellladestation, ausgebildet.

Gemäß einer Weiterbildung der Erfindung ist vorgesehen, dass die Anzeigevorrichtung zusätzlich einen Ventilator aufweist. Vorteilhafterweise kann die Anzeigevorrichtung damit nicht nur passiv - durch An- und Ausschalten der Hintergrundbeleuchtung und Ausschalten der Anzeigevorrichtung - sondern auch aktiv durch Erzeugen einer Luftströmung gekühlt werden.

Die Erfindung wird im Folgenden anhand der Zeichnung näher erläutert. Dabei zeigen:

Fig. 1 eine schematische Darstellung eines Ausführungsbeispiels einer Ladestation, und

Fig. 2 ein Flussdiagramm eines Ausführungsbeispiels eines Verfahrens zum Betreiben einer Anzeigevorrichtung der Ladestation.

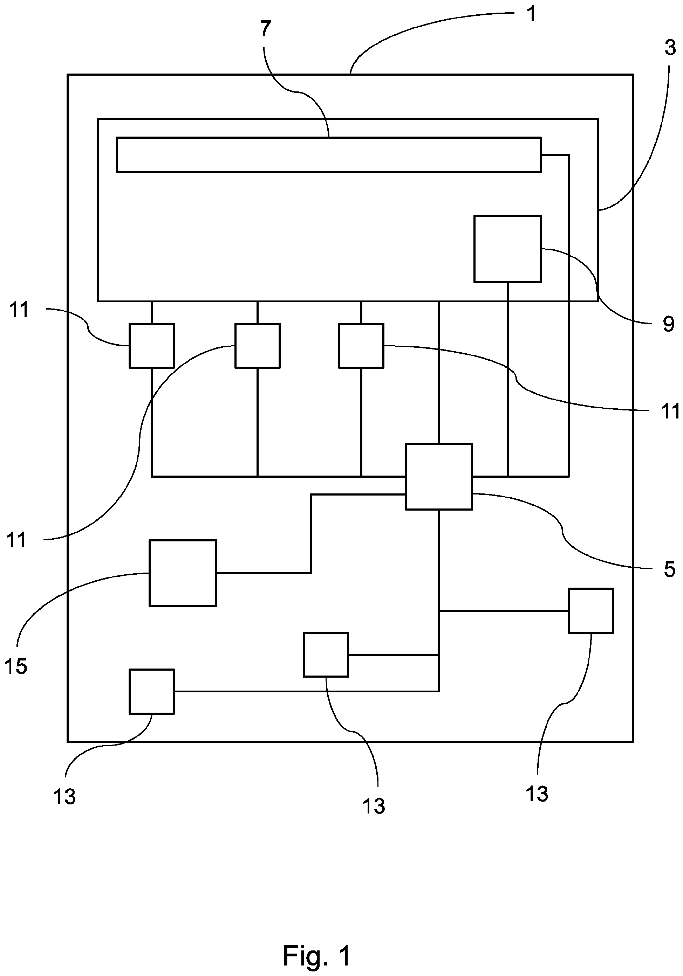

**Figur 1** zeigt eine schematische Darstellung eines Ausführungsbeispiels einer Ladestation 1 mit einer Anzeigevorrichtung 3 und einer Steuervorrichtung 5.

Die Anzeigevorrichtung 3 weist eine Hintergrundbeleuchtung 7 auf. Zusätzlich ist der Anzeigevorrichtung 3 vorzugsweise mindestens ein Ventilator 9 zugeordnet.

Weiterhin weist die Ladestation 1 optional mindestens einen Anzeigevorrichtungs-Temperatursensor 11, vorzugsweise eine Mehrzahl an Anzeigevorrichtungs-Temperatursensoren 11 auf. Alternativ oder zusätzlich weist die Ladestation 1 mindestens einen Ladestations-Temperatursensor 13, vorzugsweise eine Mehrzahl an Ladestations-Temperatursensoren 13, auf. Insbesondere weist die Ladestation 1 zusätzlich eine Klimatisierungsvorrichtung 15 auf. Die Klimatisierungsvorrichtung 15 weist vorzugsweise eine Kältemaschine mit einem Kältemittelkreislauf auf und ist eingerichtet zur Kühlung eines Luftstroms und/oder eines Kühlmittel-Kreislaufs. Insbesondere wird mittels des Luftstroms eine Batterie der Ladestation 1 gekühlt, während mittels des Kühlmittel-Kreislaufs eine Leistungselektronik der Ladestation 1 gekühlt wird.

Der mindestens eine Anzeigevorrichtungs-Temperatursensor 11, insbesondere die Mehrzahl an Anzeigevorrichtungs-Temperatursensoren 11, ist eingerichtet, um eine einem räumlichen Bereich der Anzeigevorrichtung 3 zugeordnete Anzeigevorrichtungs-Bereichs-Temperatur $t_{AV}^B$ zu ermitteln.

Der mindestens eine Ladestations-Temperatursensor 13, vorzugsweise die Mehrzahl an Ladestations-Temperatursensoren 13, ist eingerichtet, um eine einem räumlichen Bereich der Ladestation 1 zugeordnete Ladestations-Bereichs-Innentemperatur $t_{LS}^B$ zu ermitteln.

Die Steuervorrichtung 5 ist mit der Anzeigevorrichtung 3, der Hintergrundbeleuchtung 7, dem Ventilator 9, dem mindestens einen Anzeigevorrichtungs-Temperatursensor 11, dem mindestens einen Ladestations-Temperatursensor 13, und der Klimatisierungsvorrichtung 15 steuerungswirkverbunden. Weiterhin ist die Steuervorrichtung 5 eingerichtet, um die Anzeigevorrichtung 3, die Hintergrundbeleuchtung 7 und den Ventilator 9 anzusteuern. Zusätzlich ist die Steuervorrichtung 5 eingerichtet, um den mindestens einen Anzeigevorrichtungs-Temperatursensor 11, den mindestens einen Ladestations-Temperatursensor 13 und die Klimatisierungsvorrichtung 15 auszulesen und/oder Informationen vom dem mindestens einen Anzeigevorrichtungs-Temperatursensor 11, dem mindestens einen Ladestations-Temperatursensor 13 und der Klimatisierungsvorrichtung 15 zu empfangen. Darüber hinaus ist die Steuervorrichtung 5 eingerichtet, um ein Verfahren zum Betreiben der Anzeigevorrichtung 3 durchzuführen.

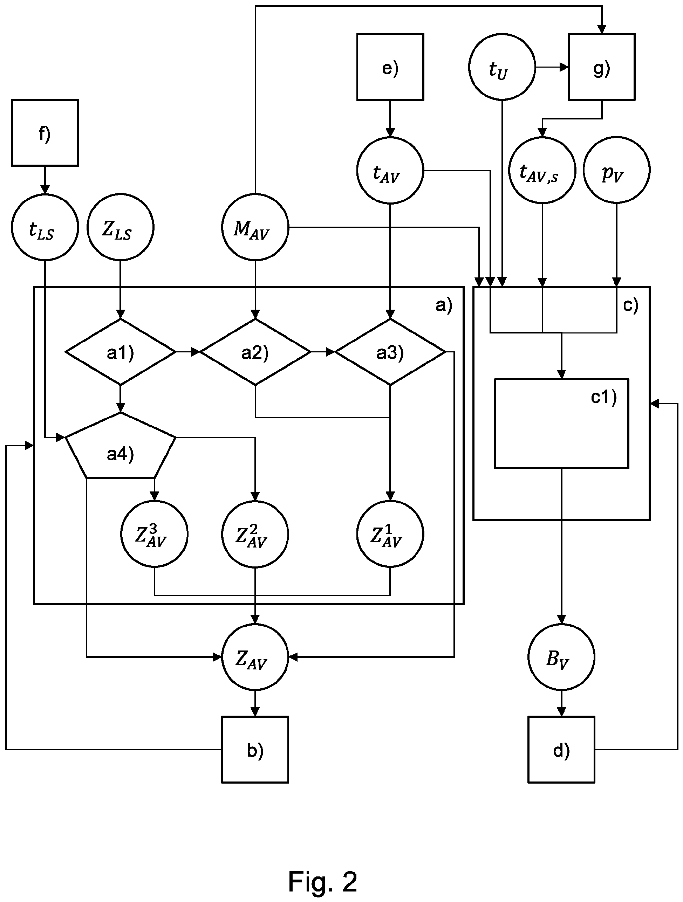

Das Verfahren zum Betreiben der Anzeigevorrichtung 3 wird in Figur 2 näher erläutert.

**Figur 2** zeigt ein Flussdiagramm eines Ausführungsbeispiels des Verfahrens zum Betreiben der Anzeigevorrichtung 3 der Ladestation 1.

In einem ersten Schritt a) wird basierend auf einer der Anzeigevorrichtung 3 zugeordneten Anzeigevorrichtungs-Temperatur $t_{AV}$ und einem der Ladestation 1 zugeordneten Ladestations-Temperatur-Zustand $Z_{LS}$ ein Betriebszustand $Z_{AV}$ der Anzeigevorrichtung 3 festgelegt.

Vorzugsweise wird der Betriebszustand $Z_{AV}$ der Anzeigevorrichtung 3 zusätzlich basierend auf einer Ladestations-Innentemperatur $t_{LS}$ und/oder einem Betriebsmodus $M_{AV}$ der Anzeigevorrichtung 3 festgelegt.

Bei einer bestimmungsgemäßen Verwendung der Ladestation beträgt die Ladestations-Innentemperatur $t_{LS}$ typischerweise von -20 °C bis 45 °C.

Vorzugsweise wird in einem ersten ersten Schritt a1) der Ladestations-Temperatur-Zustand $Z_{LS}$ als ein Lastzustand der Klimatisierungsvorrichtung 15 ausgewertet.

Ist der Ladestations-Temperatur-Zustand $Z_{LS}$ ein Überlastzustand, wird in einem zweiten ersten Schritt a2) der Betriebsmodus $M_{AV}$ der Anzeigevorrichtung 3 ausgewertet.

Befindet sich die Anzeigevorrichtung 3 in einem Prioritätsmodus wird in einem dritten ersten Schritt a3) die Anzeigevorrichtungs-Temperatur $t_{AV}$ ausgewertet. Falls die Anzeigevorrichtungs-Temperatur $t_{AV}$ größer ist als eine Maximal-Anzeigevorrichtungs-Temperatur, wird der erste Betriebszustand $Z_{AV}^1$ festgelegt. Falls die Anzeigevorrichtungs-Temperatur $t_{AV}$ kleiner oder gleich der Maximal-Anzeigevorrichtungs-Temperatur ist, wird der zuletzt bestimmte oder voreingestellte Betriebszustand $Z_{AV}$ beibehalten.

Befindet sich die Anzeigevorrichtung 3 bei der Auswertung des Betriebsmodus $M_{AV}$ der Anzeigevorrichtung 3 in dem zweiten ersten Schritt a2) in einem Normalbetrieb, wird der erste Betriebszustand $Z_{AV}^1$ festgelegt.

Ist der Lastzustand $Z_{LS}$ der Klimatisierungsvorrichtung 15 in dem ersten ersten Schritt a1) ein Normalzustand, wird in einem vierten ersten Schritt a4) die Ladestations-Innentemperatur $t_{LS}$ ausgewertet. Ist die Ladestations-Innentemperatur $t_{LS}$ größer oder gleich einer Mindest-Anzeigevorrichtungs-Umgebungstemperatur, wird der zweite Betriebszustand $Z_{AV}^2$ festgelegt. Ist die Ladestations-Innentemperatur $t_{LS}$ kleiner oder gleich einer Minimal-Anzeigevorrichtungs-Umgebungstemperatur, wird der dritte Betriebszustand $Z_{AV}^3$ festgelegt. Ist die Ladestations-Innentemperatur $t_{LS}$ kleiner als die Mindest-Anzeigevorrichtungs-Umgebungstemperatur und größer als die Minimal-Anzeigevorrichtungs-Umgebungstemperatur, wird der zuletzt bestimmte Betriebszustand $Z_{AV}$ beibehalten.

In einer Ausgestaltung ist in dem ersten Betriebszustand $Z_{AV}^1$ die Hintergrundbeleuchtung 7 der Anzeigevorrichtung 3 ausgeschaltet. In dem zweiten Betriebszustand $Z_{AV}^2$ ist die Hintergrundbeleuchtung 7 der Anzeigevorrichtung 3 angeschaltet. In dem dritten Betriebszustand $Z_{AV}^3$ ist die Anzeigevorrichtung 3 ausgeschaltet. Insbesondere ist die Anzeigevorrichtung 3 in dem ersten Betriebszustand $Z_{AV}^1$ und dem zweiten Betriebszustand $Z_{AV}^2$ eingeschaltet.

In einer Ausgestaltung wird als die Maximal-Anzeigevorrichtungs-Temperatur eine Temperatur von 40 °C bis 70 °C verwendet. Alternativ oder zusätzlich wird als die Mindest-Anzeigevorrichtungs-Umgebungstemperatur eine Temperatur von 5 °C bis 15 °C verwendet. Alternativ oder zusätzlich wird als die Minimal-Anzeigevorrichtungs-Umgebungstemperatur eine Temperatur von -5 °C bis 5 °C verwendet.

In einem zweiten Schritt b) wird die Anzeigevorrichtung 3 in den zuvor festgelegten Betriebszustand $Z_{AV}$ versetzt.

In einem optionalen dritten Schritt c) wird basierend auf dem Anzeigevorrichtungs-Betriebsmodus $M_{AV}$ ein Ventilator-Betriebspunkt $B_V$ des mindestens einen Ventilators 9 festgelegt. Vorzugsweise wird als Ventilator-Betriebspunkt $B_V$ eine Drehzahl des mindestens einen Ventilators 9 festgelegt.

In einer Ausgestaltung wird in dem dritten Schritt c) zur Bestimmung des Ventilator-Betriebspunkts $B_V$ zusätzlich mindestens ein Ventilator-Betriebspunktparameter herangezogen. Der mindestens eine Ventilator-Betriebspunktparameter ist ausgewählt aus einer Gruppe, bestehend aus einer Ladestations-Umgebungstemperatur $t_U$, der Anzeigevorrichtungs-Temperatur $t_{AV}$, einer Soll-Anzeigevorrichtungs-Temperatur $t_{AV,S}$, einem Ventilator-Steuerungsparameter $p_V$, und einer beliebigen Kombination mindestens zwei der vorhergehenden Parameter.

Vorzugsweise beträgt die Soll-Anzeigevorrichtungs-Temperatur von 30 °C bis 65 °C.

In einer besonders bevorzugten Ausgestaltung wird in dem dritten Schritt c) ein PI-Regler c1) verwendet, welcher basierend auf der Anzeigevorrichtungs-Temperatur $t_{AV}$, der Soll-Anzeigevorrichtungs-Temperatur $t_{AV,S}$ und dem Ventilator-Steuerungsparameter $p_V$ den Ventilator-Betriebspunkts $B_V$ - insbesondere die Drehzahl des mindestens einen Ventilators 9 - bestimmt. Dabei wird die Soll-Anzeigevorrichtungs-Temperatur $t_{AV,S}$ in Abhängigkeit von dem Anzeigevorrichtungs-Betriebsmodus $M_{AV}$ und der Ladestations-Umgebungstemperatur $t_U$ gewählt, insbesondere wahlweise mittels eines Prioritätsbetriebs-Zusammenhangs oder eines Normalbetriebs-Zusammenhangs.

In einem optionalen vierten Schritt d) wird der Ventilator 9 in den Ventilator-Betriebspunkt $B_V$ versetzt.

Insbesondere werden der Betriebszustands $Z_{AV}$ und der Ventilator-Betriebspunkt $B_V$ gleichzeitig, insbesondere mit dem gleichen vorbestimmten zeitlichen Abstand oder mit der gleichen Frequenz festgelegt.

In einem optionalen fünften Schritt e) wird die Anzeigevorrichtungs-Temperatur $t_{AV}$ bestimmt. Vorzugsweise wird die Anzeigevorrichtungs-Temperatur $t_{AV}$ basierend auf der mindestens einen Anzeigevorrichtungs-Bereichs-Temperatur $t_{AV}^{B}$, insbesondere der Mehrzahl an Anzeigevorrichtungs-Bereichs-Temperaturen $t_{AV}^{B}$, bestimmt. Dabei wird die Anzeigevorrichtungs-Temperatur $t_{AV}$ als die mindestens eine Anzeigevorrichtungs-Bereichs-Temperatur $t_{AV}^{B}$ oder als ein Maximum oder ein Mittelwert der Mehrzahl an Anzeigevorrichtungs-Bereichs-Temperaturen $t_{AV}^{B}$ bestimmt. Vorzugsweise wird die mindestens eine Anzeigevorrichtungs-Bereichs-Temperatur $t_{AV}^{B}$, insbesondere die Mehrzahl an Anzeigevorrichtungs-Bereichs-Temperaturen $t_{AV}^{B}$, zeitgleich mit dem ersten Schritt a) bestimmt.

In einem optionalen sechsten Schritt f) wird die Ladestations-Innentemperatur $t_{LS}$ bestimmt. Vorzugsweise wird die Ladestations-Innentemperatur $t_{LS}$ basierend auf der mindestens einen Ladestations-Bereichs-Innentemperatur $t_{LS}^{B}$, insbesondere der Mehrzahl an Ladestations-Bereichs-Innentemperaturen $t_{LS}^{B}$, bestimmt. Dabei wird die Ladestations-Innentemperatur $t_{LS}$ als die mindestens eine Ladestations-Bereichs-Innentemperatur $t_{LS}^{B}$ oder als ein Maximum oder ein Mittelwert der Mehrzahl an Ladestations-Bereichs-Innentemperaturen $t_{LS}^{B}$ bestimmt. Vorzugsweise wird die mindestens eine Ladestations-Bereichs-Innentemperatur $t_{LS}^{B}$, insbesondere die Mehrzahl an Ladestations-Bereichs-Innentemperaturen $t_{LS}^{B}$, zeitgleich mit dem ersten Schritt a) bestimmt.

In einem optionalen siebten Schritt g) wird die Soll-Anzeigevorrichtungs-Temperatur $t_{AV,S}$ in Abhängigkeit von der Ladestations-Umgebungstemperatur $t_U$ und/oder des Anzeigevorrichtungs-Betriebsmodus $M_{AV}$ gewählt, insbesondere mittels des Prioritätsbetriebs-Zusammenhangs und des Normalbetriebs-Zusammenhangs.

Insbesondere wird somit das Verfahren insgesamt wiederholt, insbesondere zyklisch, insbesondere mit der vorbestimmten zeitlichen Taktung, insbesondere mit einer Frequenz von 1 Hz bis 10 Hz, besonders bevorzugt 5 Hz, durchgeführt.

**Patentansprüche**

1. Verfahren zum Betreiben einer Anzeigevorrichtung (3) einer Ladestation (1), wobei

   - basierend auf einer der Anzeigevorrichtung (3) zugeordneten Anzeigevorrichtungs-Temperatur ($t_{AV}$) und einem der Ladestation (1) zugeordneten Ladestations-Temperatur-Zustand ($Z_{LS}$) ein Betriebszustand ($Z_{AV}$) der Anzeigevorrichtung (3) festgelegt wird, wobei
   - die Anzeigevorrichtung (3) in den Betriebszustand ($Z_{AV}$) versetzt wird.

2. Verfahren nach Anspruch 1, wobei der Betriebszustand ($Z_{AV}$) ausgewählt wird aus einer Gruppe, bestehend aus: einem ersten Betriebszustand ($Z_{AV}^{1}$), in dem eine Hintergrundbeleuchtung (7) der Anzeigevorrichtung (3) ausgeschaltet ist, einem zweiten Betriebszustand ($Z_{AV}^{2}$), in dem die Hintergrundbeleuchtung (7) der Anzeigevorrichtung (3) angeschaltet ist, und einem dritten Betriebszustand ($Z_{AV}^{3}$), in dem die Anzeigevorrichtung (3) ausgeschaltet ist.

**3.** Verfahren nach einem der vorhergehenden Ansprüche, wobei als Ladestations-Temperatur-Zustand ($Z_{LS}$) ein Lastzustand einer Klimatisierungsvorrichtung (15) der Ladestation (1) verwendet wird, wobei der Lastzustand insbesondere ausgewählt ist aus einer Gruppe, bestehend aus einem Normalzustand und einem Überlastzustand.

**4.** Verfahren nach einem der vorhergehenden Ansprüche, wobei zur Festlegung des Betriebszustandes ($Z_{AV}$) zusätzlich ein Anzeigevorrichtungs-Betriebsmodus ($M_{AV}$) herangezogen wird.

**5.** Verfahren nach einem der vorhergehenden Ansprüche, wobei der Anzeigevorrichtungs-Betriebsmodus ($M_{AV}$) ausgewählt ist aus einer Gruppe, bestehend aus einem Normalbetrieb und einem Prioritätsbetrieb.

**6.** Verfahren nach einem der vorhergehenden Ansprüche, wobei zur Festlegung des Betriebszustandes ($Z_{AV}$) zusätzlich eine Ladestations-Innentemperatur ($t_{LS}$) der Ladestation (1) herangezogen wird.

**7.** Verfahren nach einem der vorhergehenden Ansprüche, wobei

- basierend auf dem Anzeigevorrichtungs-Betriebsmodus ($M_{AV}$) ein Ventilator-Betriebspunkt ($B_V$), insbesondere eine Drehzahl, mindestens eines der Anzeigevorrichtung (3) zugeordneten Ventilators (9) festgelegt wird, wobei
- der Ventilator (9) in den Ventilator-Betriebspunkt ($B_V$) versetzt wird.

**8.** Verfahren nach Anspruch 7, wobei zur Bestimmung des Ventilator-Betriebspunkts ($B_V$) zusätzlich mindestens ein Ventilator-Betriebspunktparameter herangezogen wird, der ausgewählt ist aus einer Gruppe, bestehend aus einer Ladestations-Umgebungstemperatur ($t_U$), der Anzeigevorrichtungs-Temperatur ($t_{AV}$), einer Soll-Anzeigevorrichtungs-Temperatur ($t_{AV,S}$), einem Ventilator-Steuerungsparameter ($p_V$), und einer beliebigen Kombination mindestens zwei der vorhergehenden Parameter.

**9.** Verfahren nach einem der vorhergehenden Ansprüche, wobei mittels einer Mehrzahl an Anzeigevorrichtungs-Temperatursensoren (11) jeweils eine Anzeigevorrichtungs-Bereichs-Temperatur ($t_{AV}^B$) ermittelt wird, wobei die Anzeigevorrichtungs-Temperatur ($t_{AV}$) anhand der Mehrzahl an Anzeigevorrichtungs-Bereichs-Temperaturen ($t_{AV}^B$) bestimmt wird.

**10.** Verfahren nach einem der vorhergehenden Ansprüche, wobei

a) der erste Betriebszustand ($Z_{AV}^1$) festgelegt wird, wenn sich der Ladestations-Temperatur-Zustand ($Z_{LS}$) in dem Überlastzustand befindet, sich der Anzeigevorrichtungs-Betriebsmodus ($M_{AV}$) in dem Prioritätsbetrieb befindet und die Anzeigevorrichtungs-Temperatur ($t_{AV}$) größer ist als eine Maximal-Anzeigevorrichtungs-Temperatur, und/oder

b) der erste Betriebszustand ($Z_{AV}^1$) festgelegt wird, wenn sich der Ladestations-Temperatur-Zustand ($Z_{LS}$) in dem Überlastzustand und der Anzeigevorrichtungs-Betriebsmodus ($M_{AV}$) in dem Normalbetrieb befindet, und/oder

c) der zweite Betriebszustand ($Z_{AV}^2$) festgelegt wird, wenn sich der Ladestations-Temperatur-Zustand ($Z_{LS}$) in dem Normalzustand befindet und die Ladestations-Innentemperatur ($t_{LS}$) mindestens einer Mindest-Anzeigevorrichtungs-Umgebungstemperatur entspricht, und/oder

d) der dritte Betriebszustand ($Z_{AV}^3$) festgelegt wird, wenn sich der Ladestations-Temperatur-Zustand ($Z_{LS}$) in dem Normalzustand befindet und die Ladestations-Innentemperatur ($t_{LS}$) höchstens einer Minimal-Anzeigevorrichtungs-Umgebungstemperatur entspricht.

**11.** Verfahren nach einem der vorhergehenden Ansprüche, wobei der Betriebszustand ($Z_{AV}$) der Anzeigevorrichtung (3) wiederholt festgelegt wird.

**12.** Steuervorrichtung (5) zur Durchführung eine Verfahrens nach einem der vorhergehenden Ansprüche.

**13.** Ladestation (1) mit einer Anzeigevorrichtung (3) und einer Steuervorrichtung (5) nach Anspruch 12, wobei die Anzeigevorrichtung (3) eine Hintergrundbeleuchtung (7) aufweist.

**14.** Ladestation (1) nach Anspruch 13, wobei die Anzeigevorrichtung (3) zusätzlich einen Ventilator (9) aufweist.

Fig. 1

Fig. 2

EP 4 494 921 A1

Europäisches
Patentamt

European
Patent Office

Office européen
des brevets

# EUROPÄISCHER RECHERCHENBERICHT

**Nummer der Anmeldung**

EP 24 18 7524

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | DE 10 2012 110061 A1 (FUJITSU TECH SOLUTIONS IP GMBH [DE]) 24. April 2014 (2014-04-24) | 12 | INV. B60L53/302 B60L53/30 |
| Y | * Absatz [0017]; Abbildung 1 * * Absatz [0034] * ----- | 1-8,10, 11,13,14 | |
| Y | DE 20 2013 105353 U1 (A & F GMBH [DE]) 3. Dezember 2013 (2013-12-03) * Absatz [0012]; Abbildungen 1,3 * * Absatz [0035] * ----- | 1-8,10, 11,13,14 | |
| A | DE 11 2006 002269 T5 (MITSUBISHI ELECTRIC CORP [JP]) 12. Juni 2008 (2008-06-12) * Absatz [0011] - Absatz [0012] * ----- | 1-14 | |

**RECHERCHIERTE SACHGEBIETE (IPC)**

B60L
G06F
G09G

Der vorliegende Recherchenbericht wurde für alle Patentansprüche erstellt

| Recherchenort | Abschlußdatum der Recherche | Prüfer |
|---|---|---|
| Den Haag | 12. Dezember 2024 | Berkus, Frank |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument

 

& : Mitglied der gleichen Patentfamilie, übereinstimmendes
    Dokument

EPO FORM 1503 03.82 (P04C03)

13

**ANHANG ZUM EUROPÄISCHEN RECHERCHENBERICHT
ÜBER DIE EUROPÄISCHE PATENTANMELDUNG NR.**

EP 24 18 7524

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

12-12-2024

| Im Recherchenbericht angeführtes Patentdokument | Datum der Veröffentlichung | Mitglied(er) der Patentfamilie | Datum der Veröffentlichung |
|---|---|---|---|
| DE 102012110061 A1 | 24-04-2014 | KEINE | |
| DE 202013105353 U1 | 03-12-2013 | DE 202013105353 U1 | 03-12-2013 |
| | | EP 2875989 A1 | 27-05-2015 |
| DE 112006002269 T5 | 12-06-2008 | DE 112006002269 T5 | 12-06-2008 |
| | | JP WO2007034593 A1 | 19-03-2009 |
| | | US 2010141669 A1 | 10-06-2010 |
| | | WO 2007034593 A1 | 29-03-2007 |

EPO FORM P0461

Für nähere Einzelheiten zu diesem Anhang : siehe Amtsblatt des Europäischen Patentamts, Nr.12/82